# EUROPEAN PATENT APPLICATION

(11) **EP 4 742 743 A1**
(43) Date of publication of application: **13.05.2026**
(21) Application number: 24852157.7
(22) Date of filing: 29.07.2024
(51) Int. Cl.: H04W 28/084, H04W 76/12, H04W 76/22, H04L 41/0853, H04L 67/1021, H04W 64/00, H04W 88/14, H04L 41/0894

(54) **METHOD FOR MANAGING SESSION FOR EDGE COMPUTING SERVICE, AND DEVICE THEREFOR**

(30) Priority: 07.08.2023 KR 20230103028; 15.02.2024 KR 20240021755
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR); BAE, Jaehyeon, Suwon-si Gyeonggi-do 16677 (KR); LEE, Jicheol, Suwon-si Gyeonggi-do 16677 (KR)
(74) Representative: Nederlandsch Octrooibureau
(86) International application number: PCT/KR2024/011032
(87) International publication number: WO 2025/033801

(57) **Abstract**

The present disclosure relates to a 5G or 6G communication system for supporting higher data transmission rates. This method performed by an AMF entity in a wireless communication system may comprise the steps of: receiving subscription data from a UDM entity; identifying an LECF entity and an SMF entity on the basis of at least some from among the subscription data, a first message about the generation of a PDU session received from a terminal, position information of the terminal, and LECF entity information; and transmitting, to the LECF entity, a second message for PDU session generation. The subscription data can include a first indicator indicating that local offloading control by a local edge control function (LECF) entity is permitted, and the second message can include a second indicator indicating the local offloading control and information about the SMF entity.

## Description

### [Technical Field]

The disclosure relates to a wireless communication system and, more specifically, to a method of operating core network functions for PDU session management in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advancement of mobile communication systems as described above, it has become possible to provide various services, and accordingly, there is a need for a method for effectively providing such services.

### [Disclosure of Invention]

### [Technical Problem]

The disclosure is to provide an apparatus and a method capable of effectively managing an edge computing session in a wireless communication system.

When a local data center is built or a new edge application server (EAS) is deployed in an existing local data center to support a new edge computing service, signaling between network functions is required for configuring a user plane path for traffic transmitted to and received from the edge application server. Some of the network functions exchanging such signaling may be deployed in the local data center, and the remaining network functions may be deployed in a central data center. Whenever a new edge application server is newly deployed or an operational change occurs in the local data center, signaling between the local data center and the central data center continuously occurs, and a load may be concentrated on operation of the local data center and central network functions.

The disclosure enables resolution of a phenomenon in which a load for managing an edge computing session is concentrated on network functions deployed at a central location and a phenomenon in which excessive signaling occurs between a central data center and a local data center.

### [Solution to Problem]

In order to solve the above problems, the disclosure may provide an access and mobility management function (AMF) entity in a wireless communication system, the AMF entity including a transceiver and a controller connected to the transceiver. The controller may be configured to receive subscription data from a unified data management (UDM) entity, wherein the subscription data includes a first indicator indicating that local offloading control by a local edge control function (LECF) entity is allowed. The controller may be configured to identify the LECF entity and a session management function (SMF) entity, based on at least a part of the subscription data, a first message for establishment of a protocol data unit (PDU) session, the first message being received from a terminal, location information of the terminal, or LECF entity information. The controller may be configured to transmit a second message for establishment of the PDU session to the LECF entity, wherein the second message includes a second indicator indicating the local offloading control and information on the SMF entity.

The disclosure may provide a local edge control function (LECF) entity for local offloading control in a wireless communication system, the LECF entity including a transceiver, and a controller connected to the transceiver. The controller may be configured to receive a second message for establishment of a PDU session to from an access and mobility management function (AMF) entity, wherein the second message includes a second indicator indicating the local offloading control and information on an SMF entity. The controller may be configured to transmit a third message for establishment of the PDU session to the SMF entity, and the third message may include a third indicator for requesting the local offloading control.

The disclosure may provide a method performed by an AMF entity in a wireless communication system, the method including receiving subscription data from a UDM entity, wherein the subscription data includes a first indicator indicating that local offloading control by an LECF entity is allowed. The method may include identifying the LECF entity and an SMF entity, based on at least a part of the subscription data, a first message for establishment of a PDU session, the first message being received from a terminal, location information of the terminal, or LECF entity information and transmitting a second message for establishment of the PDU session to the LECF entity, wherein the second message includes a second indicator indicating the local offloading control and information on the SMF entity.

The disclosure may provide a method performed by an LECF entity for local offloading control in a wireless communication system, the method including receiving, from an AMF entity, a second message for establishment of a PDU session, wherein the second message includes a second indicator indicating the local offloading control and information on an SMF entity. The method may include transmitting a third message for establishment of the PDU session to the SMF entity, and the third message may include a third indicator for requesting the local offloading control.

### [Advantageous Effects of Invention]

According to an embodiment of the disclosure, signaling occurrence for managing an edge computing service session between a central data center and a local data center may be minimized.

According to the disclosure, an effect of controlling a load of a network function deployed in a central data center and reducing network resources required in a local data center may be achieved.

### [Brief Description of Drawings]

FIG. 1 illustrates a 5G system architecture supporting an edge computing system according to an embodiment of the disclosure.
FIG. 2 is a flow diagram of a procedure of selecting and configuring a local edge control function (LECF) according to an embodiment of the disclosure.
FIG. 3 is a flow diagram of a procedure of selecting and configuring a local edge control function (LECF) according to an embodiment of the disclosure.
FIG. 4 is a flow diagram of a procedure of registering, discovering, and configuring an LECF according to an embodiment of the disclosure.
FIG. 5 illustrates a structure of a UE according to an embodiment of the disclosure.
FIG. 6 illustrates a structure of a base station according to an embodiment of the disclosure.
FIG. 7 illustrates a structure of a network entity according to an embodiment of the disclosure.
FIG. 8 illustrates a structure of a system including an LECF (or an NF performing a local session management operation as a local offloading function or local SMF) according to an embodiment of the disclosure.
FIG. 9 is a flow diagram of a procedure of selecting and configuring a local edge control function (LECF) according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE, LTE-A, or 5G systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description of the disclosure, terms and names defined in the 5G system standards will be used for the sake of convenience, but the disclosure is not limited by these terms and names and may be applied in the same way to systems that conform other standards.

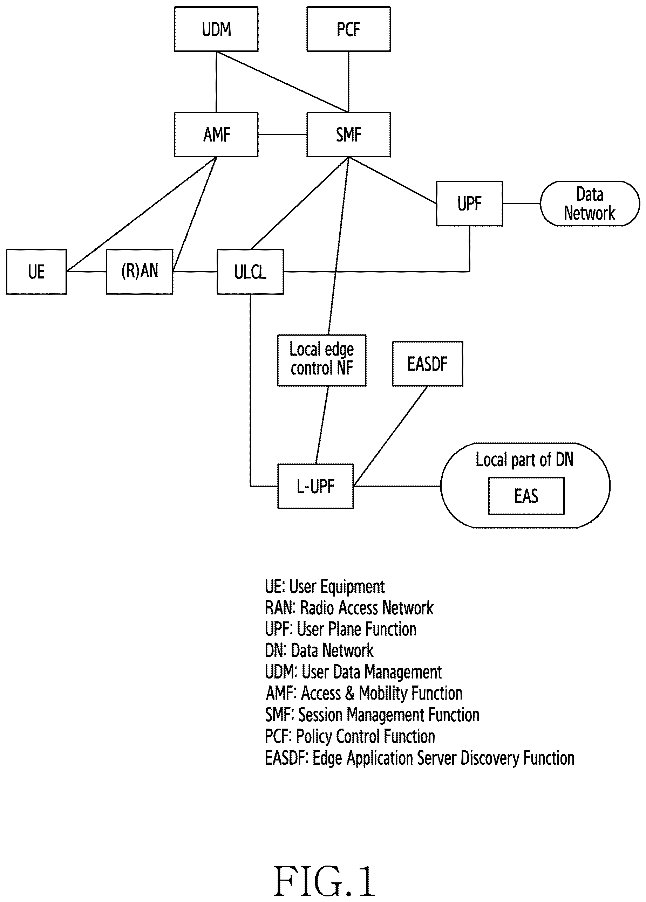

FIG. 1 illustrates a 5G system architecture supporting an edge computing system according to an embodiment of the disclosure.

The 5G system architecture supporting an edge computing system may include various network functions (NFs), and FIG. 1 illustrates some of the NFs, for example, an access and mobility management function (AMF), a session management function (SMF), a policy control function (PCF), a unified data management (UDM), a data network (DN) or a local part of DN, in which local access to the data network is possible, a user plane function (UPF), a (radio) access network ((R)AN), and a user equipment (UE).

The respective NFs support the following functions.
- The AMF may provide functions for access and mobility management on a per-UE basis, and basically, one UE may be connected to one AMF.
- The DN refers to, for example, an operator service, Internet access, a third-party service, or the like. The DN transmits a downlink protocol data unit (PDU) to the UPF, or receives, from the UPF, a PDU transmitted by the UE. The local part of DN refers to a data network in which local access to a part of the DN is possible, and thus a data transmission path is short. As used herein, the local part of DN may mean a DN in which an edge application server supporting an edge computing service is deployed.
- The PCF receives information on a packet flow from an application server, and provides a function of determining policies, such as mobility management and session management. Specifically, the PCF supports functions, such as support of a unified policy framework for controlling a network operation, provision of a policy rule so that the control plane function(s) (e.g., AMF, SMF, etc.) may execute the policy rule, and front end implementation for accessing relevant subscription information in order to determine a policy within a user data repository (UDR).
- The SMF provides a session management function, and if the UE has multiple sessions, each session may be managed by a different SMF.
- The UDM stores the user's subscription data, policy data, and the like.
- The UPF transfers a downlink PDU, received from the DN, to the UE via the (R)AN, and transfers an uplink PDU, received from the UE, to the DN via the (R)AN. An uplink classifier (ULCL) refers to a UPF having a function of classifying and transmitting uplinks. A local UPF (L-UPF) serves as a PDU session anchor for a session transmitted to the local part of DN.
- An EAS discovery function (EASDF) processes a domain name system query transmitted by the UE according to a rule provided by the SMF. For example, the EASDF may forward a DNS query transmitted by the UE to a DNS server, receive a DNS response, transmit related reporting to the SMF, and provide the DNS response to the UE.
- A local edge control NF is an NF proposed in the disclosure and manages a session related to a locally deployed edge computing service. A session-related policy for an edge computing service deployed in a particular area may be applied to the ULCL or L-UPF.

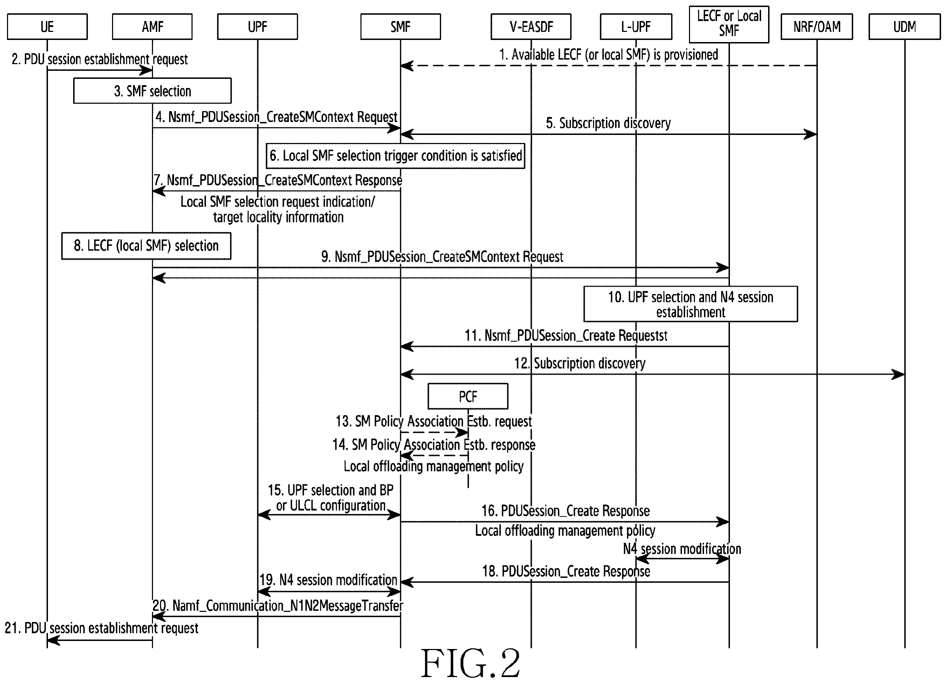

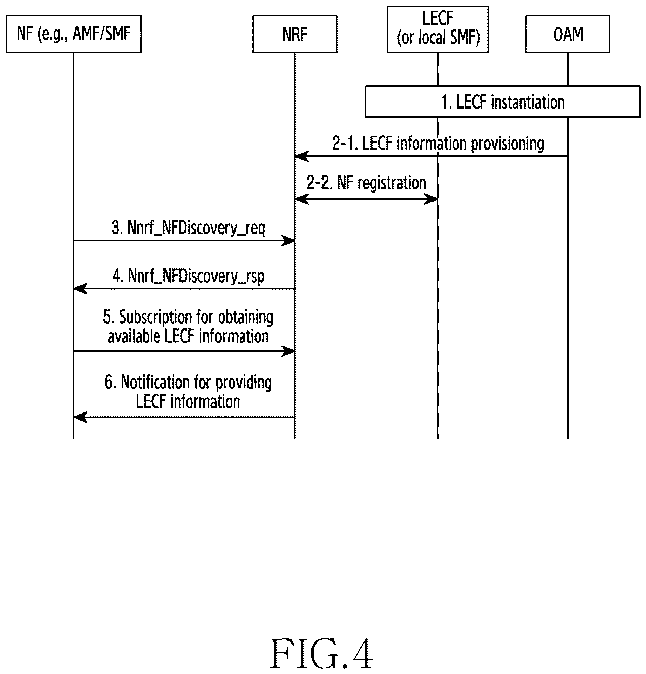

FIG. 2 is a flow diagram of a procedure of selecting and configuring a local edge control function (LECF) according to an embodiment of the disclosure.
1. An NRF or an OAM may provide an SMF with information on a local edge control function (LECF) or a local SMF that is capable of providing a service in a particular area. The LECF may refer to a network function (NF) for local edge control. The LECF may be a network function separate from an existing AMF or SMF, or may be defined as a local SMF that is an SMF supporting particular functionality. In this case, an NF supporting a local edge control function may register, with the NRF, that the NF supports the function.
   In the following description, the LECF is used as a term referring to a new NF or a local SMF. The information on the LECF may include LECF address information, an identifier, service area information, deployment area information (locality), and a data network access identifier (DNAI) list. The deployment area information (locality) may include values such as a locality type (e.g., data center, city, county, district, state, region, country, province, or a customized locality type) and a locality value (an actual identifier and address information that may correspond to the locality type, e.g., a data center identifier and physical address information, a zone ID, or an operator-assigned area identifier value). A procedure in which the NRF or the OAM configures LECF-related information for the SMF is described in more detail with reference to FIG. 4.
2. A UE transmits a PDU session establishment request message (PDU Session Estb Request) to an AMF.
3. The AMF selects an SMF responsible for session management for the UE.
4. The AMF transmits the PDU session establishment request message to the SMF selected in stage 3. The PDU session establishment request message may include a PDU session identifier, a UE identifier, a data network name (DNN), single-network slice selection assistance information (S-NSSAI) information, and user location information.
5. The SMF collects subscription information from a UDM by using information included in the PDU session establishment request message received from the AMF. For example, the SMF may transmit information such as an SMF identifier, a UE identifier, a DNN, and S-NSSAI to the UDM, and the UDM may transmit, to the SMF, subscription information stored in and mapping with the information received from the SMF. Corresponding subscription data may include UE authorization for EAS discovery via EASDF and local offloading control information. In addition, the subscription data may include local offloading control policy-related information (e.g., an application identifier, an FQDN, a DNN, S-NSSAI, or a port ID) indicating that performing local offloading control is possible only for a particular service.
   The UE authorization for EAS discovery via EASDF may be information indicating that a service is available for a corresponding UE through an EASDF. The local offloading control information may include a local offloading control allowed indication, which indicates whether local control is allowed, and local offloading control target application information (e.g., an FQDN or an application identifier).
6. If the local offloading control information is included in the subscription information received in stage 5, the SMF may determine to apply local control for a corresponding session by using an LECF (or local SMF). Alternatively, when both the local offloading control information and the UE authorization for EAS discovery via EASDF are included in the subscription information, the SMF may determine to apply local offloading control. In addition, if the UE authorization for EAS discovery via EASDF is included, the SMF may determine to transfer EASDF information to the UE or an LECF. If the UE authorization for EAS discovery via EASDF is not included, the SMF may determine to transmit local DNS information or DNS information of a general operator to an LECF or the UE. When the SMF determines to apply local offloading control (or when the subscription information indicates that local offloading control is allowed), the SMF may perform an LECF (or local SMF) discovery and selection operation or may transmit, to the AMF, a response for the PDU session establishment message without performing the LECF discovery and selection operation. Such a determination may be made according to information configured in the SMF or an operator policy.

When the SMF performs LECF (or local SMF) discovery and selection, the SMF considers user location information and a service area and deployment area (locality) information of an LECF (or a local SMF) that matches the user location. The SMF may use, as the user location information, a value received from the AMF. If the SMF has not received the user location information from the AMF in a previous stage, the SMF may request user location information from the AMF or may request user location information from a local management function. The SMF may consider user location information obtained in this manner and a service area and deployment area information of an LECF. In addition, although the SMF may consider both deployment area information and a service area included in an NF profile of an LECF (local SMF), the SMF may make a determination by preferentially considering the deployment area information.

LECF (or local SMF) information may be preconfigured in the SMF or may be obtained from the NRF. The SMF may obtain the LECF information from the NRF. A related detailed description and a prerequisite procedure are the same as those described with reference to FIG. 4.

7. When the SMF determines to apply local offloading control as in stage 6, the SMF may provide, to the AMF, LECF (or local SMF) selection request indication information or a local offloading control indicator and target locality information, together with information such as a UE identifier, a DNN, and S-NSSAI. The SMF may select a DNAI value or list mapped to user location information or a deployment area, and may provide the selected DNAI value or list to the AMF together with the target locality information. If the SMF has performed LECF selection in a previous stage, the SMF may provide LECF information together.

The LECF (or local SMF) information may be preconfigured in the SMF or may be obtained from the NRF. The SMF may obtain LECF information from the NRF. A related detailed description and a prerequisite procedure are the same as those described with reference to FIG. 4.

8. The AMF performs an LECF discovery and selection procedure. The AMF may use LECF information locally configured or LECF information provided from the SMF. Alternatively, the AMF may obtain LECF information by requesting the LECF information from the NRF. When requesting the LECF information from the NRF, the AMF may transmit, to the NRF, a UE identifier, an NF type (LECF or local SMF), a local offloading control capability of an NF, a DNN, S-NSSAI, user location information, deployment area information, and target DNAI information, and may obtain LECF information mapped to the information.

9. The AMF transmits a PDU session establishment request message to an LECF selected through the preceding stages. The request message may include a PDU session identifier, a UE identifier, UE location information, a DNN, S-NSSAI, and SMF information.

10. The LECF selects a local UPF and performs an N4 session establishment operation.

11. The LECF transmits a PDU session establishment request message to the SMF received from the AMF. The message may include a PDU session identifier, a UE identifier, UE location information, a DNN, S-NSSAI, and an L-UPF identifier and address information (tunnel information).

12. The SMF may obtain subscription information from the UDM to obtain policy and subscriber information required to be applied to a session managed through the LECF.

13. The SMF transmits, to a PCF, an SM policy association establishment request message. The message may include a local offloading management policy request indicator, LECF identifier and address information, DNAI information, a DNN, S-NSSAI information, service area information, and locality information.

14. If the local offloading management policy request indicator is included in the information received from the SMF, the PCF may generate a policy to be applied by the SMF and a policy to be applied by the LECF separately and may provide the policies to the SMF. The PCF may provide, to the SMF, the policy to be applied by the LECF by explicitly indicating the policy as local offloading management policy information. The local offloading management policy information may be applied only in a particular area or an area managed by a particular LECF, or a place corresponding to a particular deployment area information (locality). Such regional restriction may be provided from the PCF to the SMF together with location information or locality information.

15. The SMF selects a UPF and performs UP path configuration by using local UPF information provided from the LECF.

16. The SMF provides, to the LECF, the local offloading management policy information received from the PCF.

17. The LECF may perform an N4 session modification procedure with the local UPF in order to apply a received local offloading management policy.

18. The LECF transmits, to the SMF, information indicating that local UPF configuration has been completed and that the local offloading management policy has been successfully configured.

19. The SMF may reconfigure a configuration of the UPF according to a response of the LECF.

20. The SMF transmits, to the AMF, a message indicating that PDU session establishment has been completed.

21. The AMF transmits, to the UE, the PDU session establishment completion message received from the SMF.

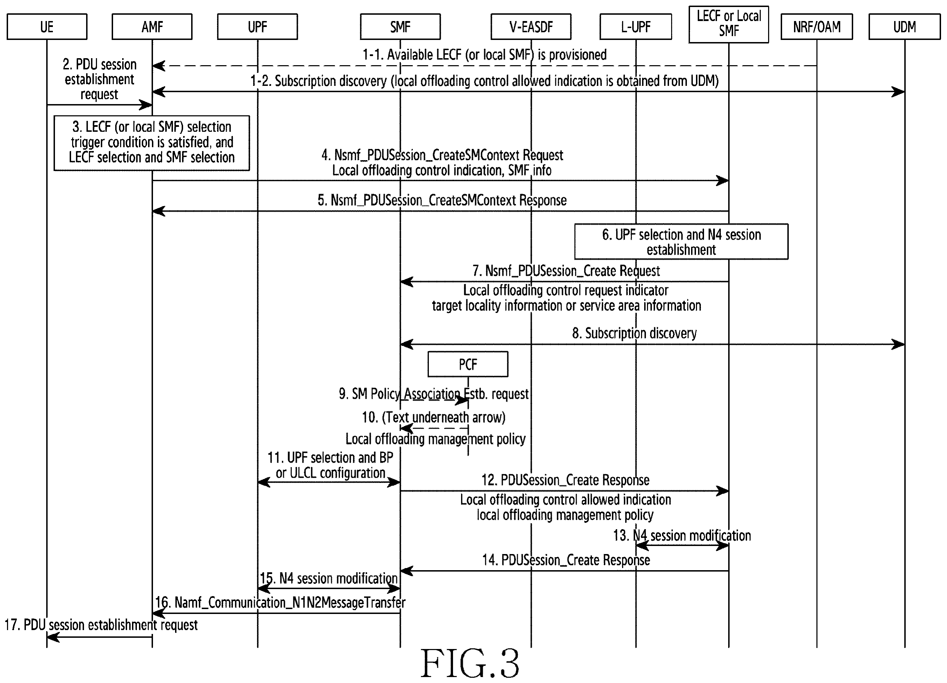

FIG. 3 is a flow diagram of a procedure of selecting and configuring a local edge control function (LECF) according to an embodiment of the disclosure.

1-1. An NRF or an OAM may provide an AMF with information on a local edge control function (LECF) or a local SMF that is capable of providing a service in a particular area. In the following description, the LECF is used as a term referring to both a new NF and a local SMF. The information on the LECF may include LECF address information, an identifier, service area information, and deployment area information (locality). The deployment area information (locality) may include values such as a locality type (e.g., data center, city, county, district, state, region, country, province, or a customized locality type) and a locality value (an actual identifier and address information that may correspond to the locality type, e.g., a data center identifier and physical address information, a zone ID, or an operator-assigned area identifier value). A procedure in which the NRF or the OAM configures LECF-related information for the AMF is described in more detail with reference to FIG. 4.

1-2. The AMF may identify, during a registration procedure of a particular UE, whether local edge control, local offloading control, or local management is allowed for the UE, through subscription information provided by a UDM. For example, if a local offloading control allowed indication is included in SMF selection subscription data stored in the UDM and the indicator is provided to the AMF, the AMF may determine that local offloading is allowed and may perform LECF selection by considering at least one of UE location information, a DNN, and S-NSSAI.

2. A UE transmits a PDU session establishment request message to the AMF. The request message may include information such as a PDU session identifier, a DNN, and S-NSSAI.

3. The AMF may determine to select an LECF to perform local offloading control for the UE and may select the LECF and an SMF. For example, when a particular UE performs a registration procedure, the AMF may obtain, from the UDM, a local offloading control allowed indication indicating that local edge control, local offloading control, or local management is allowed for the UE, or the AMF may determine that local offloading is allowed according to an operator policy configured in the AMF, and then perform an LECF discovery and selection operation. The AMF may perform LECF selection by considering at least one of UE location information, a DNN, and S-NSSAI. When performing LECF discovery and selection, although the AMF may consider both deployment area information and a service area included in an NF profile of an LECF (local SMF), the AMF may make a determination by preferentially considering the deployment area information (as described in detail in the description with reference to FIG. 2). LECF (or local SMF) information (e.g., an identifier, an address, locality, a service area, or a DNAI list) may be preconfigured in the AMF or may be obtained from the NRF. A related detailed description and a prerequisite procedure are the same as those described with reference to FIG. 4. The AMF may perform SMF discovery and selection separately from LECF discovery and selection.

4. The AMF may transmit a PDU session establishment request to the LECF. For example, the AMF may transmit, to the LECF, an Nsmf_PDUSession_CreateSMContext Request or Nlecf_PDUSession_Create message. The Nsmf_PDUSession_CreateSMContext Request or Nlecf_PDUSession_Create message may include a local offloading control indicator, and SMF address and identifier information selected in a previous stage.

5. The LECF transmits, to the AMF, a response (whether performing local offloading control is possible) for the Nsmf_PDUSession_CreateSMContext Request or Nlecf_PDUSession_Create message transmitted to the LECF in stage 4.

6. The LECF selects a local UPF and performs UP path configuration through an N4 session establishment procedure.

7. The LECF transmits a PDU session establishment request procedure to an SMF corresponding to information received from the AMF. A corresponding message may include a local offloading control request indicator, target locality information, a UE identifier, a DNN, S-NSSAI, and a PDU session identifier.

8. The SMF may obtain subscription information from the UDM by using information received from the LECF. The subscription information may include information such as whether to allow session management through local offloading control, UE authorization for EAS discovery via EASDF, and the like. In addition, the subscription information may include local offloading control policy-related information (e.g., an application identifier, an FQDN, a DNN, S-NSSAI, or a port ID) indicating that performing local offloading control is possible only for a particular service.

9. The SMF receives, from the LECF, a PDU session establishment request including a local offloading control request, and when it is identified that local offloading control is allowed for the corresponding UE and session, the SMF may request a local offloading management policy when performing an SM policy association with a PCF. The message may include a local offloading management policy request indicator, LECF identifier and address information, DNAI information, a DNN, S-NSSAI information, service area information, and locality information.

10. The PCF may generate a policy by using information received from the SMF and may provide the policy to the SMF. For example, when the PCF receives a request for a local offloading management policy from the SMF, the PCF may provide a local offloading management policy required to be applied by the LECF to the corresponding UE and session. The policy may be provided together with an SM policy that the SMF needs to apply to the entire PDU session.

11. The SMF may select a UPF and may perform UP path configuration. In this case, the SM policy received from the PCF may be applied. The SMF may receive both the SM policy and the local offloading management policy from the PCF. The SM policy and the local offloading management policy may be provided to the SMF as separate policies, or the local offloading management policy may be provided as partial information of the SM policy. The SMF may distinguish between the SM policy and the local offloading management policy to distinguish between a policy required to be applied to the UPF directly managed by the SMF and a policy required to be transferred to the LECF and applied at the local UPF.

12. The SMF may transmit a PDUSession_Create Response message to the LECF. The SMF transmits, to the LECF, a configured PDU session identifier, UPF information, a local offloading control allowed indicator, and the local offloading management policy received from the PCF.

13. If according to information received from the SMF, local offloading control is allowed and the local offloading management policy is received, the LECF may configure the local offloading management policy at the L-UPF and establish a connection with the UPF.

14. The LECF transmits, to the SMF, information indicating that configuration for local offloading control has been successfully completed, in response to the PDUSession_Create Response message of stage 12.

15. The SMF may reconfigure the connection between the L-UPF and the UPF.

16. The SMF transmits, to the AMF, information indicating that PDU session establishment has been successfully completed. In addition, the SMF may notify the AMF that local offloading control has been configured.

17. The AMF transmits, to the UE, information indicating that a PDU session has been successfully established.

FIG. 4 is a flow diagram of a procedure of registering, discovering, and configuring an LECF according to an embodiment of the disclosure.

1. An OAM may deploy an LECF in a particular area or a particular data center. Such a process may include both onboarding and instantiation, and may include an overall preparation operation of making the LECF capable of providing a service.

2-1. If the OAM has successfully deployed the LECF, the OAM may configure corresponding information for an NRF. In this case, the provided information may include the following.
- An identifier indicating an LECF, a local SMF, or an SMF as an NF type
- An LECF instance identifier
- LECF address information
- Supported DNN/S-NSSAI information
- LECF service area information
- Deployment area information (locality) corresponding to a place where the LECF is deployed: The deployment area information (locality) may include a locality type and a locality value (an actual identifier and address information that may correspond to the locality type). For example, the locality type may include at least a part of data center, city, county, district, state, region, country, province, and a customized locality type. For example, the locality value may include at least one of a data center identifier and physical address information, a zone ID, or an operator-assigned area identifier value.
- A DNAI list
- Local offloading control functionality/capability (or local SMF capability): When the NF type is a local SMF or an SMF, additional information such as local offloading control functionality or local offloading control capability may be provided together. Alternatively, information indicating that a local offloading control function is supported may be included as information such as a local SMF capability support indication.
- Selection preference: When the NF type is an SMF or a local SMF, "preference to be selected as local SMF" indicating a desire to be selected as a local SMF may be provided together.

2-2. The LECF may, while directly transmitting, to the NRF, a registration message, transmit, to the NRF, the information described in stage 2-1 (information such as an identifier indicating an LECF, a local SMF, or an SMF as an NF type, an LECF instance identifier, supported DNN/S-NSSAI information, LECF address information, LECF service area information, deployment area information (locality) corresponding to a place where the LECF is deployed, a DNAI list, local offloading control functionality/capability (or local SMF capability), or selection preference).

3. When an LECF discovery request is received from an NF (e.g., an AMF or an SMF), the NRF may provide LECF information, based on the information configured by the OAM in operation 2-1 or the information directly provided by the LECF through a registration procedure. The NRF may select and provide an LECF that matches information (e.g., area information, locality information, a DNN, S-NSSAI, or user location information) provided by the requesting NF. When the NRF is able to select multiple LECFs, the NRF may select an LECF by preferentially considering locality information, user location information, or selection preference.

4. The NRF provides LECF information on the LECF selected in the preceding stage to the NF as a response message. The provided LECF information may include the pieces of information listed in the description of stage 2.

5. The NF may transmit a subscription request message to the NRF in order to continuously be notified of LECF information matching a particular area or particular deployment area information (locality). The NF may provide filter information (e.g., area information, locality information, a DNN, S-NSSAI, or user location information) for receiving the information listed in stage 2, such as a subscription ID, an event ID, or a notification target address.

6. When information indicating that a new LECF is available is received from the OAF or the LECF, the NRF transmits a notification message including LECF information to the NF that has performed a subscription.

In a situation in which a PDU session established through FIG. 2 and FIG. 3 and a part of the PDU session are locally managed through an LECF, a notification may be required according to occurrence of an event related to an area managed by the LECF, an L-UPF, an EASDF, a local part of a DN, or a DNAI. In such a case, the L-UPF or the EASDF may transmit a notification message to the LECF instead of an SMF according to a policy. The LECF may determine whether to process the notification received from the L-UPF or the EASDF by itself or to forward the notification to the SMF. For example, when the notification corresponds to an event (e.g., an event specified in a local offloading management policy received from the SMF or an event specified to be subject to local control applied by the SMF) such as L-UPF reselection, steering modification within the L-UPF, or DNAI reselection between the L-UPF and the local part of the DN, which is handleable within a specific data center in which the LECF is deployed, the LECF may perform a subsequent operation without forwarding the notification to the SMF. If the event corresponds to an event (e.g., usage monitoring) related to an operation that needs to be centrally collected and processed, such as charging, the LECF may transmit the notification received from the L-UPF to the SMF.

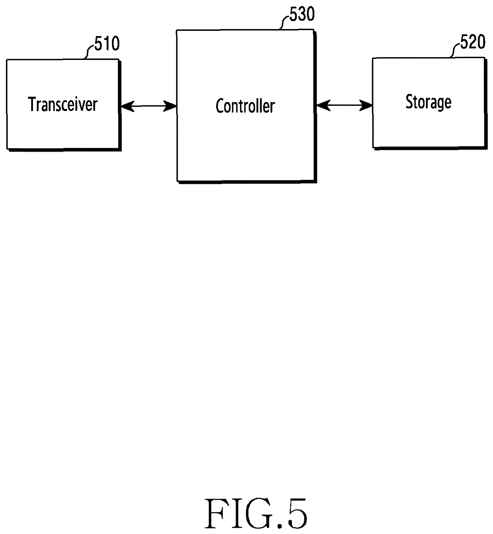

FIG. 5 illustrates a structure of a UE according to an embodiment of the disclosure.

As illustrated in FIG. 5, the UE of the disclosure may include a controller (control unit) 530, a transceiver 510, and a storage (memory) 520. However, components of the UE are not limited to the above-described example. For example, the UE may include a larger or smaller number of components than the above-described components. Furthermore, the controller 530, the transceiver 510, and the storage 520 may be implemented in the form of a single chip. According to an embodiment, the transceiver 510 of FIG. 5 may include the transmitter 2304 and the receiver 2308 of FIG. 23. Also, the controller 530 of FIG. 5 may include at least one processor or controller.

According to an embodiment, the controller 530 may control a series of processes so that the UE can operate according to the above-described embodiments of the disclosure. For example, according to an embodiment of the disclosure, the controller 530 may control the components of the UE to perform transmission and reception methods of the UE according to whether the base station mode is a base station power saving mode or a base station normal mode. The controller 530 may include one or multiple controllers, and the controller 530 may execute programs stored in the storage 520 to perform transmission and reception operations of the UE in a wireless communication system employing the above-described carrier aggregation of the disclosure.

The transceiver 510 may transmit/receive signals with base stations. The signals transmitted/received with base stations may include control information and data. The transceiver 510 may include an RF transmitter configured to up-convert and amplify the frequency of transmitted signals, an RF receiver configured to low-noise-amplify received signals and down-convert the frequency thereof, and the like. However, this is only an embodiment of the transceiver 510, and the components of the transceiver 510 are not limited to the RF transmitter and the RF receiver. In addition, the transceiver 510 may receive signals through a radio channel, output the same to the controller 530, and transmit signals output from the controller 530 through the radio channel.

According to an embodiment, the storage 520 may store programs and data necessary for operations of the UE. In addition, the storage 520 may store control information or data included in signals transmitted/received by the UE. The storage 520 may include storage media such as a ROM, a RAM, a hard disk, a CD-ROM, and a DVD, or a combination of storage media. In addition, the storage 520 may include multiple storages. According to an embodiment, the storage 520 may store programs for performing transmission and reception operations of the UE according to whether the base station mode in the above-described embodiments of the disclosure is a base station power saving mode or a base station normal mode.

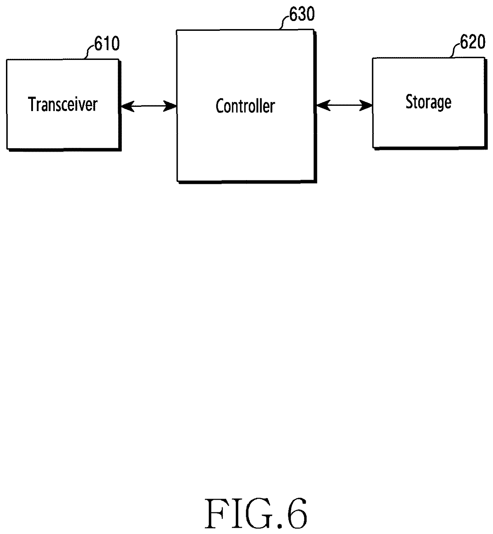

FIG. 6 illustrates a structure of a base station according to an embodiment of the disclosure.

As illustrated in FIG. 6, the base station of the disclosure may include a controller (control unit) 630, a transceiver 610, and a storage (memory) 620. However, components of the base station are not limited to the above-described example. For example, the base station may include a larger or smaller number of components than the above-described components. In addition, the controller 630, the transceiver 610, and the storage 620 may be implemented in the form of a single chip. The controller 630 of FIG. 6 may include at least one processor or controller.

The controller 630 may control a series of processes so that the base station can operate according to the above-described embodiments of the disclosure. For example, according to an embodiment of the disclosure, the controller 630 may control the components of the base station to perform UE scheduling methods according to whether the base station mode is a base station power saving mode or a base station normal mode. The controller 630 may include one or multiple controllers, and the controller 630 may execute programs stored in the storage 620 to perform UE scheduling methods according to whether the above-described base station mode is a base station power saving mode or a base station normal mode.

The transceiver 610 may transmit/receive signals with UEs. The signals transmitted/received with UEs may include control information and data. The transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver. In addition, the transceiver 610 may receive signals through a radio channel, output the same to the controller 630, and transmit signals output from the controller 630 through the radio channel.

According to an embodiment, the storage 620 may store programs and data necessary for operations of the base station. In addition, the storage 620 may store control information or data included in signals transmitted/received by the base station. The storage 620 may include storage media such as a ROM, a RAM, a hard disk, a CD-ROM, and a DVD, or a combination of storage media. In addition, the storage 620 may include multiple storages. According to an embodiment, the storage 620 may store programs for performing UE scheduling methods according to whether the base station mode in the above-described embodiments of the disclosure is a base station power saving mode or a base station normal mode.

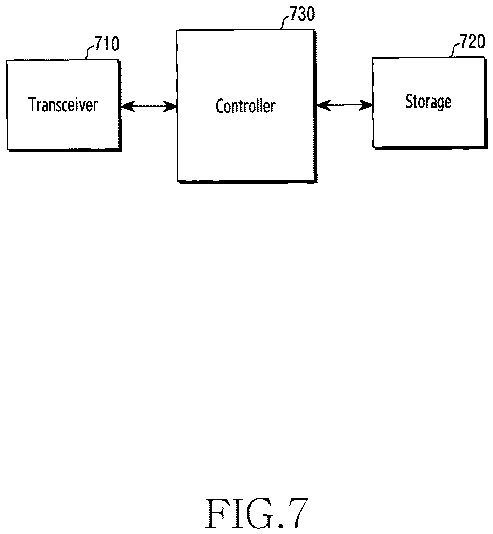

FIG. 7 illustrates a structure of a network entity according to an embodiment of the disclosure.

FIG. 7 is a block diagram illustrating a structure of a network entity according to an embodiment of the disclosure.

Referring to FIG. 7, the network entity of the disclosure may include a controller 730, a transceiver 710, and a storage (or memory) 720. However, components of the network entity are not limited to the above-described example. For example, the network entity may include a larger or smaller number of components than the above-described components. In addition, the controller 730, the transceiver 710, and the storage 720 may be implemented in the form of a single chip. Furthermore, according to an embodiment of the disclosure, the network entity may refer to a network function (NF), and the NF may include an AMF, an SMF, a PCF, a UDM, a DN, an AF, a UPF, an L-UPF, an NEF, a UTM, an EASDF, a local edge control NF (LECF), etc.

According to an embodiment of the disclosure, the controller 730 may control a series of processes so that the NF can operate according to the above-described embodiments of the disclosure. For example, the controller 730 may control the components of the network entity in order to perform the methods for providing broadcast services according to the above-described embodiments. The controller 730 may control the components of the network entity to perform the embodiments of the disclosure by executing the programs stored in the storage 720. In addition, the controller 730 may be an application processor (AP), a communication processor (CP), a circuit, an application -specific circuit, or at least one processor.

According to an embodiment of the disclosure, the transceiver 710 may transmit/receive signals with other network entities, base stations, or UEs. The signals transmitted/received with other network entities or UEs may include control information and data. The transceiver 710 may include an RF transmitter configured to up-convert and amplify the frequency of transmitted signals, an RF receiver configured to low-noise-amplify received signals and down-convert the frequency thereof, and the like. However, this is only an embodiment of the transceiver 710, and the components of the transceiver 710 are not limited to the RF transmitter and the RF receiver. In addition, the transceiver 710 may receive signals through a radio channel, output the same to the controller 730, and transmit signals output from the controller 730 through the radio channel.

According to an embodiment of the disclosure, the storage 720 may store programs and data necessary for operations of the network entity. In addition, the storage 720 may store control information or data included in signals transmitted/received by the network entity. The storage 720 may include storage media such as a ROM, a RAM, a hard disk, a CD-ROM, and a DVD, or a combination of storage media. In addition, the storage 720 may include multiple storages. Furthermore, according to an embodiment, the storage 720 may store programs for executing the above-described network slice change supporting methods.

It should be noted that the configuration diagrams, illustrative diagrams of control/data signal transmission methods, and illustrative diagrams of operation procedures as illustrated in FIG. 1 to FIG. 7 are not intended to limit the scope of protection of the disclosure. That is, all the constituent units or operation steps shown in FIG. 1 to FIG. 7 should not be construed as essential elements for implementing the disclosure, and even when including only some of the elements, the disclosure may be implemented without impairing the true nature of the disclosure.

The above-described operations of the embodiments may be implemented by providing any unit of a device with a memory device storing corresponding program codes. That is, a controller in the device may perform the above-described operations by reading and executing the program codes stored in the memory device by means of a processor or central processing unit (CPU).

Various units or modules of an entity or terminal device set forth herein may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

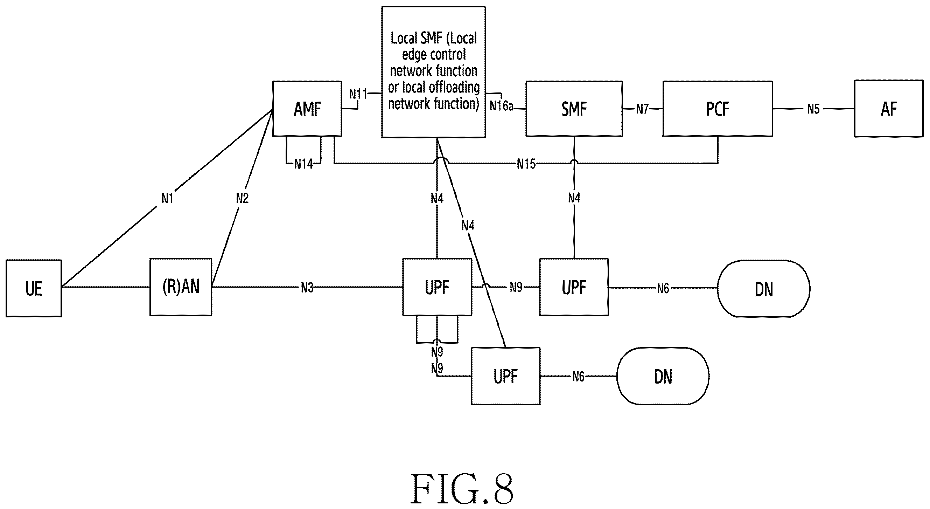

FIG. 8 illustrates a structure of a system including a local edge control network function (LECF) (or an NF performing a local session management operation as a local offloading function or local SMF) according to an embodiment of the disclosure. Referring to FIG. 8, an LECF (or an NF performing a local session management operation as a local offloading function or local SMF) may directly control an uplink classifier (ULCL) or a branching point (BP) in order to manage a session related to a locally deployed edge computing service. A UPF managed by the LECF may be connected to a UPF managed by an SMF. According to an operator's selection, the local edge control NF (or a local offloading function or a local SMF) may directly communicate with a PCF to establish a session management policy association.

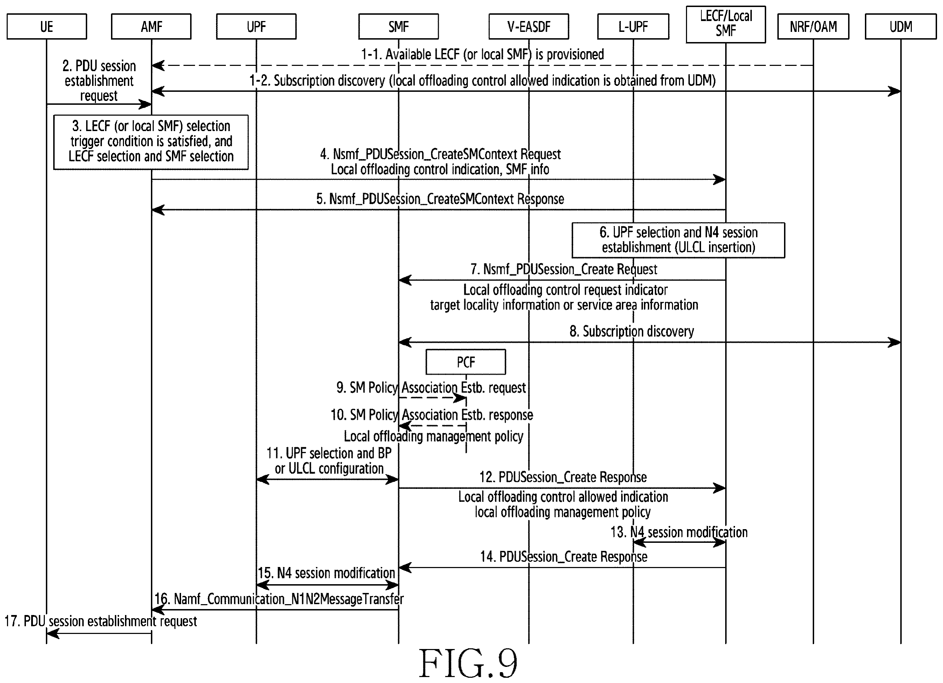

FIG. 9 is a flow diagram of a procedure of selecting and configuring a local edge control function (LECF) according to an embodiment of the disclosure.

1-1. A network function repository function (NRF) or an OAM may provide an AMF with information on a local edge control function (LECF) or a local SMF that is capable of providing a service in a particular area. In the following description, the LECF is used as a term referring to both a new NF and a local SMF. The information on the LECF may include LECF address information, an identifier, service area information, and deployment area information (locality). The deployment area information (locality) may include values such as a locality type (e.g., data center, city, county, district, state, region, country, province, or a customized locality type) and a locality value (an actual identifier and address information that may correspond to the locality type, e.g., a data center identifier and physical address information, a zone ID, or an operator-assigned area identifier value). A procedure in which the NRF or the OAM configures LECF-related information for the AMF is described in more detail with reference to FIG. 4. In addition, the AMF may receive, from the OAM or the NRF, information on an area in which local edge control is applicable (e.g., an area in which local edge control, local offloading control, or local session management is available), and the information on the area may be configured in the AMF. The information on the area in which local edge control is applicable (e.g., the information on the area in which local edge control is applicable is information on an area in which local edge control, local offloading control, or local session management is available, may be represented by TAI, a cell ID, locality, or DNAI information, and may be defined in association with a particular DNN or S-NSSAI according to an operator configuration) may also be configured in an SMF. In the disclosure, the information on the area in which local edge control is applicable (e.g., an area in which local edge control, local offloading control, or local session management is available) may be defined in association with a particular DNN or S-NSSAI, or a combination thereof, and may be configured in or provided to a network function in association with the DNN or the S-NSSAI. For example, the AMF may provide, to the SMF, local offloading control service area information corresponding to a particular DNN or S-NSSAI together with the DNN or S-NSSAI, and the SMF may provide information on the particular DNN or S-NSSAI to a PCF and obtain or provide the local offloading control service area information corresponding to the DNN or S-NSSAI.

1-2. The AMF may identify, during a registration procedure of a particular UE, whether local edge control, local offloading control, or local session management is allowed for the UE, through subscription information provided by a UDM. For example, if a local offloading control allowed indication is included in SMF selection subscription data stored in the UDM and the indicator is provided to the AMF, the AMF may determine that local offloading is allowed and may perform LECF selection by considering at least one of UE location information, a DNN, and S-NSSAI.

According to another embodiment, the AMF may determine, during a registration procedure of a particular UE, whether local edge control, local offloading control, or local session management is allowed for the UE, based on a location of the UE, local offloading control service area information (e.g., a cell ID, a TA ID, a DNAI), or an operator policy (local configuration) configured in the AMF). For example, even when an SMF capable of providing a service for a location of the UE exists, if the location of the UE is included in a local offloading control service area, the AMF may determine to support local offloading control and determine selection and insertion of a local offloading control function or a local SMF. (If the service area of the selected SMF includes the current UE location, but the UE location is in the area of the local offloading control service area, AMF decides to support local offloading control for this PDU Session and selects an local offloading control function (local SMF) that serves the area where the UE camps.)

2. A UE may transmit a PDU session establishment request message to the AMF. The request message may include information such as a PDU session identifier, a DNN, and S-NSSAI.

3. The AMF may determine to select an LECF to perform local offloading control for the UE and may select the LECF and an SMF. For example, when a particular UE performs a registration procedure, the AMF may obtain, from the UDM, a local offloading control allowed indication indicating that local edge control, local offloading control, or local management is allowed for the UE, and may perform an LECF discovery and selection operation. Alternatively, the AMF may determine that local offloading is allowed according to an operator policy configured in the AMF, and perform an LECF discovery and selection operation. Alternatively, the AMF may perform an LECF discovery and selection operation by considering the location of the UE and a local offloading control service area. Even when an SMF capable of providing a service for a location of the UE exists, if the location of the UE is included in a local offloading control service area, the AMF may determine to support local offloading control and determine to select and insert a local offloading control function or a local SMF. The AMF may perform LECF selection by considering at least one of UE location information, a DNN, and S-NSSAI. When performing LECF discovery and selection, the AMF may consider both deployment area information and a service area included in an NF profile of an LECF (local SMF), and may make a determination by preferentially considering the deployment area information (as described in detail in the description with reference to FIG. 2). LECF (or local SMF) information (e.g., an identifier, an address, locality, a service area, or a DNAI list) may be preconfigured in the AMF or may be obtained from the NRF. A related detailed descriptions and a description for a prerequisite procedure are the same as those described with reference to FIG. 4. The AMF may perform SMF discovery and selection separately from LECF discovery and selection.

4. The AMF may transmit a PDU session establishment request to the LECF. For example, the AMF may transmit, to the LECF, an Nsmf_PDUSession_CreateSMContext Request or Nlecf_PDUSession_Create message. The Nsmf_PDUSession_CreateSMContext Request or Nlecf_PDUSession_Create message may include a local offloading control indicator, and SMF address and identifier information selected in a previous stage.

5. The LECF may transmit, to the AMF, a response (whether performing local offloading control is possible) for the Nsmf_PDUSession_CreateSMContext Request or Nlecf_PDUSession_Create message of stage 4.

6. The LECF may select a local UPF and perform UP path configuration through an N4 session establishment procedure.

7. The LECF may transmit a PDU session establishment request message to an SMF corresponding to information received from the AMF. For example, the LECF may transmit, to the SMF, an Nsmf_PDUSession_Create Request message. The message transmitted by the LECF to the SMF may include at least one of a local offloading control request indicator and target locality information (e.g., at least one of information corresponding to an area or a data center in which the LECF is located, or information which may be configured by an operator), a UE identifier, a DNN, S-NSSAI, a PDU session identifier, or service locality information. The LECF may transmit, to the SMF, at least one of DNAI list information on DNAIs capable of supporting local offloading and a local offloading control request indicator. The SMF may select, from the list of DNAIs capable of supporting local offloading received from the LECF, an actually available DNAI, an interested DNAI, or a target DNAI, and provide the selected DNAI to the LECF.

8. The SMF may obtain subscription information from the UDM by using information received from the LECF. The subscription information may include information such as whether to allow session management through local offloading control, UE authorization for EAS discovery via EASDF, and the like. In addition, the subscription information may include local offloading control policy-related information (e.g., an application identifier, an FQDN, a DNN, S-NSSAI, or a port ID) indicating that performing local offloading control is possible only for a particular service. The SMF may determine whether to perform local offloading control by considering at least one of pieces of information such as whether to allow session management through local offloading control and UE authorization for EAS discovery via EASDF, and the location of the UE and a local offloading control service area (or a local session management service area or corresponding local edge computing control area information, or local offloading control locality information), and may provide the determination on whether to perform local offloading control to the LECF. According to another embodiment, the SMF may determine whether to perform local offloading control, based on a policy received by the SMF from the PCF.

9. The SMF receives, from the LECF, a PDU session establishment request including a local offloading control request, and when it is identified that local offloading control is allowed for the corresponding UE and session, the SMF may request a local offloading management policy when performing an SM policy association with the PCF. For example, the SMF may transmit, to the PCF, an SM Policy Association Estb. Request message. The request message may include at least a part of a local offloading management policy request indicator, LECF identifier and address information, local offloading control target DNAI information, a DNN, S-NSSAI information, service area information, or locality information. Alternatively, when performing an SM policy association with the PCF, the SMF may provide, to the PCF, information such as local offloading control request information or a current UE location, a local offloading service area, etc. The PCF may provide, to the SMF in a subsequent operation, a session management policy including whether local offloading control is performable or is allowed, by considering information received from the SMF and subscription data and policy information (which may include whether local offloading control is performable or allowed for a particular DNN, S-NSSAI, or a UE location) related to local offloading control or local edge control stored in a UDR.

10. The PCF may generate a policy by using information received from the SMF and may provide the policy to the SMF. For example, when the PCF receives a request for a local offloading management policy from the SMF, the PCF may provide a local offloading management policy required to be applied by the LECF to the corresponding UE and session. The policy may be provided together with an SM policy that the SMF needs to apply to the entire PDU session. The PCF may transmit, to the SMF, an SM Policy Association Estb. Response message including the local offloading management policy.

11. The SMF may select a UPF and may perform UP path configuration. In this case, the SM policy received from the PCF may be applied. The SMF may receive both the SM policy and the local offloading management policy from the PCF. The SM policy and the local offloading management policy may be provided to the SMF as separate policies, or the local offloading management policy may be provided as partial information of the SM policy. The SMF may distinguish between the SM policy and the local offloading management policy to distinguish between a policy required to be applied to the UPF directly managed by the SMF and a policy required to be transferred to the LECF and applied at the local UPF. The local offloading management policy may include information such as N6 routing information, a local offloading index, an IP range, an FQDN, a DNAI, and an authorized session AMBR for local offloading (the information included in the local offloading management policy may include information for specifying a location and traffic of a local offloading control target service or application, and information such as routing control and QoS control for the specified traffic). In addition, the local offloading management policy may be provided together with a local offloading policy index, and the local offloading policy index may be used to indicate a specific local offloading management policy. For example, instead of transmitting and receiving the entire local offloading management policy between network functions, only a local offloading policy index value may be transmitted and received, whereby a request for application indication, deletion, or update of a local offloading management policy corresponding to the index value may be performed. For this purpose, the local offloading management policy may be provided in advance by the PCF to different network functions, or the local offloading management policy may be pre-configured in each network function to correspond to a local offloading policy index value.

12. The SMF may transmit a PDUSession_Create Response message to the LECF. The SMF may transmit, to the LECF, a configured PDU session identifier, UPF information, a local offloading control allowed indicator, and the local offloading management policy received from the PCF. The PDUSession_Create Response message may include at least one of the local offloading control allowed indication or the local offloading management policy.

13. If according to information received from the SMF, local offloading control is allowed and the local offloading management policy is received, the LECF may configure the local offloading management policy at the L-UPF and establish a connection with the UPF.

14. The LECF may provide, to the SMF, information indicating that configuration for local offloading control has been successfully completed, in response to the PDUSession_Create Response message of stage 12.

15. The SMF may reconfigure the connection between the L-UPF and the UPF.

16. The SMF may transmit, to the AMF, information indicating that PDU session establishment has been successfully completed. In addition, the SMF may notify the AMF that local offloading control has been configured.

17. The AMF may transmit, to the UE, information indicating that a PDU session has been successfully established.

In another embodiment, an operation for LECF insertion and selection described above may be performed by a network function (e.g., the PCF or SMF) other than the AMF. For example, when the SMF obtains session management subscription information from the UDM, if the SMF obtains information such as local edge control authorization or local session management authorization information, the SMF may determine an operation for LECF selection and insertion for a particular area (a local session management service area or a local offloading control service area) for the corresponding UE. The SMF may obtain information required to determine the operation for LECF selection and insertion from the AMF, may obtain the information as subscription information from the UDM, or may obtain the information as partial information of a session management policy from the PCF. In addition, a network function (the AMF, SMF, or PCF) may perform an operation for LECF insertion and selection (or a determination to perform local session management), and the network function (the AMF, SMF, or PCF) may determine the operation for LECF insertion and selection (or the determination to perform local session management) by considering information provided by multiple different network functions, including a location of the UE, subscription information stored in the UDM, a local session management service area (or a local offloading control service area), a session management policy provided by the PCF, and EAS deployment information (e.g., EAS location information, DNAI information, or address information) that may be provided through an NEF.

When the SMF according to an embodiment determines to insert an LECF, the SMF may directly select the LECF and notify the AMF of the selected LECF, or may transmit an LECF selection request to the AMF and obtain LECF information from the AMF, and may perform management for a PDU session and a UP path configuration operation, based on the selected LECF. In addition, the SMF may consider EAS deployment information and policy information received from the PCF in order to perform the UP path configuration operation for the selected LECF.

A time point at which the AMF or the SMF performs an operation for LECF insertion and selection may vary. For example, the operation for LECF insertion and selection may be performed by the AMF during a registration procedure, or may be performed by the AMF or the SMF during a PDU session establishment procedure.

In addition, an operation for LECF insertion and selection may be performed by the SMF during an EAS discovery procedure. For example, when the SMF receives a notification for a DNS query or a DNS response from an EASDF, the SMF may perform an operation related to LECF insertion and selection by considering at least one of information (e.g., an FQDN or an IP address) included in the DNS query or the DNS response included in the notification message received from the EASDF, a location of the UE, and a local offloading control service area. When an FQDN or an IP address included in the notification message received from the EASDF corresponds to local offloading control or local edge control target application information, and the location of the UE is included in the local offloading control service area, the SMF may transmit an NF discovery request (an LECF information request) to the NRF in order to perform the operation related to LECF insertion and selection, and may obtain LECF address and identifier information (see FIG. 4). Information required for the SMF to make such a determination may be obtained from the OAM, the PCF, or the AMF. As described above, after receiving a DNS-related notification message from the EASDF, the SMF may perform LECF selection, insertion, and ULCL insertion operations. The ULCL insertion operation may be directly performed by the SMF such that an N4 session for a ULCL is established between the SMF and the ULCL, or the SMF may provide information such as a local session management policy or a local offloading control management policy to an LECF (or a local SMF) and indicate insertion of the ULCL, so that the LECF performs an operation for inserting the ULCL. In addition, through such an operation, a session with the ULCL may be directly connected to the LECF. In the disclosure, for convenience of description, only a ULCL is described, and when IPv6 is used, the ULCL may be described as a branching point.

Information that the SMF may provide to the LECF through the foregoing embodiments may include at least a part of a local offloading management policy (which may include a local offloading control target FQDN, an IP address and range thereof, local offloading QoS information such as a session AMBR for local offloading, and a usage monitoring/reporting rule), EASDF information, EAS deployment information, or a local DNS handling rule. The information may be provided from the SMF to the LECF during PDU session establishment or during an EAS discovery procedure. Alternatively, the LECF may directly obtain the information from the PCF or the NEF.

The configuration diagrams of a UE, a base station, and a network entity illustrated in FIGS. 5 to 7 may be interpreted to describe the UE, the base station, and the network entities of FIGS. 8 and 9. For example, the UE of FIG. 5 may be correspond to the UE in FIG. 8 or FIG. 9. For example, the network entity of FIG. 7 may correspond to the AMF, local SMF, LECF, local offloading function, SMF, PCF, UPF, DN, or AF in FIG. 8. For example, the network entity of FIG. 7 may correspond to the AMF, UPF, SMF, PCF, V-EASDF, L-UPF, LECF, local SMF, NRF, OAM, or UDM in FIG. 9.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. An access and mobility management function (AMF) entity in a wireless communication system, the AMF entity comprising:
a transceiver; and
a controller connected to the transceiver,
wherein the controller is configured to:
receive subscription data from a unified data management (UDM) entity, the subscription data comprising a first indicator indicating that local offloading control by a local edge control function (LECF) entity is allowed;
based on at least a part of the subscription data, a first message, received from a terminal, for establishment of a protocol data unit (PDU) session, location information of the terminal, or LECF entity information, identify the LECF entity and a session management function (SMF) entity; and
transmit a second message for establishment of the PDU session to the LECF entity, the second message comprising a second indicator indicating the local offloading control and information on the SMF entity.

2. The AMF entity of claim 1, wherein the controller is further configured to, based on a policy configured for the AMF entity or the first indicator included in the subscription data, determine to perform the local offloading control by the LECF.

3. The AMF entity of claim 1, wherein the controller is further configured to receive the LECF entity information from a network function repository function (NRF) entity or an operations, administration, and maintenance (OAM) entity, and
wherein the LECF entity information comprises address information of the LECF entity, an identifier of the LECF entity, service area information of the LECF entity, or deployment area information of the LECF entity.

4. The AMF entity of claim 1, wherein the subscription data comprises information for identifying the SMF entity, and
wherein the first message comprises at least a part of data network name (DNN) information or single-network slice selection assistance information (S-NSSAI) information.

5. A local edge control function (LECF) entity for local offloading control in a wireless communication system, the LECF entity comprising:
a transceiver; and
a controller connected to the transceiver,
wherein the controller is configured to:
receive, from an access and mobility management function (AMF) entity, a second message for establishment of a PDU session, the second message comprising a second indicator indicating the local offloading control and information on a session management function (SMF) entity; and
transmit a third message for establishment of the PDU session to the SMF entity, and
wherein the third message comprises a third indicator for requesting the local offloading control.

6. The LECF entity of claim 5, wherein the controller is further configured to transmit LECF entity information to a network function repository function (NRF) entity, and
wherein the LECF entity information comprises at least one of a network function (NF) entity type identifier, an instance identifier of the LECF entity, supported data network name (DNN) information, supported single-network slice selection assistance information (S-NSSAI) information, address information of the LECF entity, service area information of the LECF entity or deployment area information of the LECF entity, a data network access identifier (DNAI) list, information on functionality or capability of the local offloading control, or selection preference information.

7. The LECF entity of claim 5, wherein the controller is further configured to:
identify a local user plane function (L-UPF) entity managed by the LECF entity; and
receive a fourth message comprising a policy for the local offloading control from the SMF entity, and
wherein the policy comprises at least one of a policy for a UPF entity managed by the SMF entity or a policy for the L-UPF entity managed by the LECF entity.

8. The LECF entity of claim 5, wherein the third message further comprises at least a part of target locality information, a terminal identifier, DNN information, S-NSSAI information, or a PDU session identifier, and
wherein the target locality information comprises deployment area information of the LECF entity.

9. A method performed by an access and mobility management function (AMF) entity in a wireless communication system, the method comprising:
receiving subscription data from a unified data management (UDM) entity, the subscription data comprises a first indicator indicating that local offloading control by a local edge control function (LECF) entity is allowed;
based on at least a part of the subscription data, a first message, received from a terminal, for establishment of a protocol data unit (PDU) session, location information of the terminal, or LECF entity information, identifying the LECF entity and a session management function (SMF) entity; and
transmitting a second message for establishment of the PDU session to the LECF entity, the second message comprising a second indicator indicating the local offloading control and information on the SMF entity.

10. The method of claim 9, further comprising, based on a policy configured for the AMF entity or the first indicator included in the subscription data, determining to perform the local offloading control by the LECF.

11. The method of claim 9, further comprising receiving the LECF entity information from a network function repository function (NRF) entity or an operations, administration, and maintenance (OAM) entity,
wherein the LECF entity information comprises address information of the LECF entity, an identifier of the LECF entity, service area information of the LECF entity, or deployment area information of the LECF entity.

12. The method of claim 9, wherein the subscription data comprises information for identifying the SMF entity, and
wherein the first message comprises at least a part of data network name (DNN) information or single-network slice selection assistance information (S-NSSAI) information.

13. A method performed by a local edge control function (LECF) entity for local offloading control in a wireless communication system, the method comprising:
receiving, from an access and mobility management function (AMF) entity, a second message for establishment of a PDU session, the second message comprising a second indicator indicating the local offloading control and information on a session management function (SMF) entity; and
transmitting a third message for establishment of the PDU session to the SMF entity,
wherein the third message comprises a third indicator for requesting the local offloading control.

14. The method of claim 13, further comprising transmitting LECF entity information to a network function repository function (NRF) entity,
wherein the LECF entity information comprises at least one of a network function (NF) entity type identifier, an instance identifier of the LECF entity, supported data network name (DNN) information, supported single-network slice selection assistance information (S-NSSAI) information, address information of the LECF entity, service area information of the LECF entity or deployment area information of the LECF entity, a data network access identifier (DNAI) list, information on functionality or capability of the local offloading control, or selection preference information.

15. The method of claim 13, further comprising:
identifying a local user plane function (L-UPF) entity managed by the LECF entity; and
receiving a fourth message comprising a policy for the local offloading control from the SMF entity,
wherein the policy comprises at least one of a policy for a UPF entity managed by the SMF entity or a policy for the L-UPF entity managed by the LECF entity.
